# EUROPÄISCHE PATENTANMELDUNG

(11) **EP 0 645 495 A2**
(43) Veröffentlichungstag der Anmeldung: **29.03.1995**
(21) Anmeldenummer: 94108852.8
(22) Anmeldetag: 09.06.1994
(51) Int. Cl.: E02B 8/02, E02F 5/28, B01D 29/05, B01D 29/44, B01D 29/64, B01D 29/82, B01D 29/94, E03F 5/14, B01D 29/01

(54) **Reinigungsvorrichtung zur Reinigung von in einem Gerinne fliessendem Wasser**

(30) Priorität: 23.09.1993 DE 4332268
(71) Anmelder: Maschinenfabrik Hellmut Geiger GmbH & Co. KG., D-76185 Karlsruhe 21 (DE)
(72) Erfinder: Marzluf, Werner, D-76287 Rheinstetten (DE)
(74) Vertreter: Pfeifer, Hans-Peter, Dr., Dr. H.-P. Pfeifer Dr. P. Jany, Patentanwälte

(57) **Zusammenfassung**

Eine Reinigungsvorrichtung zur Reinigung von in einem Gerinne (1) fließendem Wasser, welches Schmutzgut mit Feststoffanteilen enthält mit mindestens einem im wesentlichen unterhalb der Wasseroberfläche liegenden Rechenteil mit einer durchströmbaren als Siebfläche wirksamen Abscheidefläche (2,3) in Verbindung mit einem relativ zur Rechenoberfläche bewegbaren Schmutzablöseelement (10,11;12,13;14;17,18;21,22), wobei das von der Abscheidefläche gelöste Schmutzgut durch eine mit dem Schmutzablöseelement zusammenwirkende Fördereinrichtung aus dem Gerinne (1) transportiert wird, soll so verbessert werden, daß sie die Leistungsvorteile des von innen nach außen durchströmenden Siebbandes verwirklicht. Die Lösung dieser Aufgabenstellung erfolgt dadurch, daß mindestens ein im wesentlichen ebenflächiger feststehender Rechenteil mit wenigstens abschnittsweise zur Strömungsrichtung schrägliegender Abscheidefläche (2,3) vorgesehen ist, wobei der Aufnahmeteil der Fördereinrichtung in den Bereich des stromabwärtsseitigen Endes der Abscheidefläche übergeht, und daß das Schmutzablöseelement auf der Abscheidefläche bewegbar ausgebildet ist.

## Beschreibung

Die Erfindung betrifft eine Reinigungsvorrichtung zur Reinigung von in einem Gerinne fließenden Wasser, welches Schmutzgut mit Feststoffanteilen enthält, mit mindestens einem im wesentlichen unterhalb der Wasseroberfläche liegenden Rechenteil mit einer durchströmbaren, als Siebfläche wirksamen Abscheidefläche in Verbindung mit einem relativ zur Rechenoberfläche bewegbaren Schmutzablöseelement, wobei das von der Abscheidefläche gelöste Schmutzgut durch eine mit dem Schmutzablöseelement zusammenwirkende Fördereinrichtung aus dem Gerinne transportiert wird.

Aus der DE-GM 93 03 867 ist eine Reinigungsvorrichtung zur Reinigung von in einem Gerinne fließendem Wasser bekannt, mit einem von außen angeströmten Trommelrechen, wobei ein Abschälelement für abgelagertes Schmutzgut in die Durchbrechungen des Trommelrechens eingreift. Das abgelöste Schmutzgut gelangt über eine Führungsfläche des Abschälelementes in eine schrägliegende Förderschnecke und wird mit dieser Fördereinrichtung aus dem Gerinne transportiert.

Bekannte Feinrechensysteme bestehen in der Regel aus umlaufenden Siebfeldern und weisen mehrere oder sogar viele bewegliche Teile im Wasser auf. Da diese Teile außerdem teilweise in einem den Abrieb fördernden Sand-Wassergemisch arbeiten, entsteht ein hoher Verschleiß und damit hohe Betriebskosten. Bei den umlaufenden Systemen tritt im Gegensatz zu feststehenden Rechen stets der doppelte Druckverlust auf. Die freie Siebfläche bleibt dabei in jedem Fall kleiner, als der Kanalquerschnitt und festklebende Schmutzgutteile lassen sich nur schwer entfernen.

Eine mit der zuerst genannten Ausführungsform vergleichbare vorbekannte Ausbildung eines in einem Gerinne schrägliegenden Trommelrechens ist in der DE-41 36 401 A1 beschrieben. Bei dieser Ausführungsform greift zwischen die Ausnehmungen des trommelförmigen Rechens ein drehbarer Rechenkamm ein. Koaxial ausgerichtet mündet in den von dem Rechenrost umschlossenen Raum eine Förderschnecke, welche das abgeschiedene Schmutzgut zur Abwurfstelle fördert. Zur Verringerung der Verstopfungsgefahr der Förderschnecke ist dabei vorgesehen, daß der Rechenkamm langsamer angetrieben wird, als die Förderschnecke.

Ein gleichartiger Aufbau ist auch in der DE 40 42 167 A1 dargestellt. Die schmutzbeladene Flüssigkeit durchströmt dabei einen stillstehenden schrägliegenden Trommelrechen, in dem ein umlaufender Räumarm angeordnet ist. Dieser Räumarm ist mit Räumgliedern besetzt, die an dem Trommelrechen umlaufend entlangstreichen, das abgeschiedene Rechengut abnehmen und einer Schneckenfördereinrichtung zuführen. Zur Verbesserung des Räumvorganges kann dabei eine Sprühleiste verwendet werden, welche die Ablösung des an der Siebfläche abgeschiedenen Rechengutes erleichtert. Zur Unterstützung der Wirkung der Sprühleiste können ferner ein oder mehrere Bürsten vorgesehen sein.

Eine ebenfalls vorbekannte Ausbildung mit einem bandförmig umlaufenden Rechen ist in der DE 39 10 464 A1 dargestellt. Hierbei erfolgt die Reinigung des aus einer Mehrzahl von hintereinandergeschalteten stufenförmigen Rechensiebpartien bestehenden Rechens beim Passieren eines feststehenden Reinigungskammes.

Zum vorbekannten Stande der Technik gehört ferner auch die in der DE 30 28 571 A1 gezeigte Abscheidevorrichtung. Sie enthält eine Schneckenfördereinrichtung mit Sandförderer und Sandschöpfrad. Das Sandschöpfrad steht mit den Räumarmen in drehfester Verbindung, wobei dem Sandschöpfrad eine weitere Schneckenfördereinrichtung in Form eines Sandförderers zugeordnet ist.

Schließlich beschreibt die FR-PS 21 42 295 eine Fördereinrichtung zur Aufbereitung von Abfallgütern, die jedoch nicht zu einer Reinigung eines in einem Gerinne strömenden Wassers verwendet werden kann. Hierzu fehlen insbesondere Schmutzablöseelemente an den gewölbten Zuführungsflächen der Schneckenfördereinrichtung.

Die Erfindung geht von der Aufgabenstellung aus, eine Reinigungsvorrichtung zur Reinigung von in einem Gerinne fließenden Wasser, insbesondere einen Hochleistungs-Feinrechen zu schaffen, welcher die Leistungsvorteile des von innen nach außen durchströmten Siebbandes verwirklicht. Außerdem soll eine große freie Siebfläche, die bei Bedarf sogar größer sein kann als der Kanalquerschnitt, geschaffen werden. Zur Reinigung der Siebfläche wird ferner kein Abspritzwasser benötigt, das aus ökologischen Gründen für solche Anwendungen zukünftig nur beschränkt zur Verfügung steht. Die meisten Rechensysteme weisen in ihrem unteren Bereich verschiedene Einbauteile auf, so daß die Reinigung des strömenden Wassers erst oberhalb einer gewissen Höhe über der Kanalsole beginnt. Dies bedingt erhebliche Nachteile bei kleinen Zulaufmengen mit niedrigen Wasserspiegeln.

Die Lösung der Aufgabenstellung erfolgt gemäß der Erfindung dadurch, daß mindestens ein im wesentlichen ebenflächiger feststehender Rechenteil mit wenigstens abschnittsweise zur Strömungsrichtung schrägliegender Abscheidefläche vorgesehen ist, wobei der Aufnahmeteil der Fördereinrichtung in den Bereich des stromabwärtsseitigen Endes der Abscheidefläche übergeht, und daß das Schmutzablöseelement auf der Abscheidefläche bewegbar ausgebildet ist. Durch die Verwendung mindestens einer schrägliegenden feststehenden im wesentlichen vertikalen Abscheidefläche steht ein großer Querschnitt, gegebenenfalls größer als der Kanalquerschnitt, als Abscheidefläche zur Verfügung, und es lassen sich außerdem zwei oder mehrere schrägliegende Abschnitte von Abscheideflächen mit parallel zur Strömungsrichtung liegenden Abschnitten von Abscheideflächen vorteilhaft kombinieren. Da das Absetzen des Schmutzgutes auf einer relativ großen Abscheidefläche erfolgt, tritt kein Festkleben ein. Außerdem wird die Reinigung zusätzlich durch die an der Abscheidefläche wirksame Strömungskomponente in Fließrichtung unterstützt und die ebenflächigen Abscheideflächen sind durch bewegbare Schmutzablöseelemente leicht zu reinigen. Die Reinigung erfolgt ferner quasi ab Kanalsole.

Zur Verbesserung der Ablösung und der Lockerung des Schmutzgutes und gegebenenfalls zum Transportieren des abgelösten Schmutzgutes können vorteilhaft zusätzliche Vibrationsgeber angeordnet sein. Hierbei kann es zweckmäßig sein, die Abscheideflächen beweglich aufzuhängen oder elastisch zu lagern.

Im einzelnen sind verschiedene Ausbildungsformen möglich und gegebenenfalls zweckmäßig. So können vorteilhaft zwei Rechenteile mit wenigstens im Bereich des Aufnahmeteils der Fördereinrichtung konvergierenden Abscheideflächen vorgesehen sein, wobei die Fördereinrichtung im Bereich der Scheitelfläche angeordnet ist. Eine andere zweckmäßige Ausbildungsform kann vorsehen, daß zwei Rechenteile mit zwei an der Spitze miteinander verbundenen Abscheideflächen in Strömungsrichtung divergierend ausgebildet sind und daß an den strömungsabwärtsseitigen Enden der Abscheideflächen Fördereinrichtungen angeordnet sind. Bei Verwendung von zwei in Strömungsrichtung konvergierend oder divergierenden Abscheideflächen erscheint es zweckmäßig, daß die beiden Abscheideflächen gegenüber der Hauptströmungsrichtung gleiche Anstellwinkel aufweisen.

Eine andere gegebenenfalls zweckmäßige Ausbildung kann vorsehen, daß ein einzelner sich nahezu über den ganzen Gerinnequerschnitt erstreckender schrägliegender Rechenteil angeordnet ist, an dessen strömungsabwärtsseitigen Ende sich die Fördereinrichtung befindet. Durch entsprechende Wahl des Anstellwinkels läßt sich die Abscheidefläche in einem weiten Bereich verändern und an die gegebenen Strömungsverhältnisse und den Schmutzgutanfall anpassen.

Die Reinigungsvorrichtung kann zweckmäßig so aufgebaut sein, daß die Fördereinrichtung ein vorzugsweise in einer Fördermulde liegender Aufwärtsförderer ist. Obwohl verschiedene Ausführungsformen von Aufwärtsförderern Anwendung finden können, dürfte im allgemeinen eine Ausbildung der Fördereinrichtung als schrägliegende Förderschnecke zweckmäßig sein. Zur Erhöhung des Durchlasses kann die den Aufwärtsförderer bzw. die Förderschnecke aufnehmende Fördermulde zweckmäßig ebenfalls als durchströmbare Siebfläche ausgebildet sein.

Das bewegbare Schmutzablöseelement wird zweckmäßig am Rechenteil geführt. Hierzu können am Schmutzablöseelement mechanische Führungselemente vorgesehen sein, welche beispielsweise in eine Führungsleiste längs des Rechenteils eingreifen.

Als Schmutzablöseelement können ebenfalls verschiedene Ausführungsformen gewählt werden. Das Schmutzablöseelement kann zweckmäßig in Ausnehmungen der Rechenteile eingreifen und dabei kamm- oder bürstenartig ausgebildet sein. Eine andere zweckvolle Ausbildung kann in der Anwendung eines Schabers oder Abstreifers bestehen, welcher mit einer Ablösekante auf der Sieb- bzw. Abscheidefläche des Rechenteils gleitet.

Bei einer vorteilhaften Ausführungsform kann das Schmutzablöseelement mit einer Fahrantriebseinheit verbunden sein, welche einen elektrischen, pneumatischen oder hydraulischen Fahrantrieb aufweist. Ein solcher Fahrantrieb kann ferner zweckmäßig auch unter Verwendung von Linearmotoren ausgebildet sein. Eine weitere, gegebenenfalls zweckmäßige Lösung kann vorsehen, daß das Schmutzablöseelement Teil eines Manipulatorsystems (Roboter) ist.

Eine andere u.U. vorteilhafte Ausführungsform kann so aufgebaut sein, daß der Bewegungsablauf des Schmutzablöseelementes entweder nach fester Programmsteuerung oder nach der durch mindestens einen Sensor festgestellten Schmutzgutbeladung der Abscheidefläche steuerbar ist. Außerdem ist es möglich, den Bewegungsablauf des Schmutzablöseelementes so zu steuern, daß nacheinander Teilbereiche der Abscheidefläche des Rechenteils gereinigt werden und das abgelöste Schmutzgut schrittweise zur Fördereinrichtung transportiert wird (Pilgerschrittverfahren).

Eine alternative, vorteilhafte Ausführung kann vorsehen, daß das Schmutzablöseelement eine bewegbare Saugvorrichtung ist. Dabei kann sowohl eine direkte Übergabe des Schmutzgutes in eine Transporteinrichtung an einer Abwurfstelle als auch die Übergabe an einen Aufwärtsförderer, vorzugsweise eine Förderschnecke, vorgesehen sein.

Schließlich kann als Schmutzablöseelement gegebenenfalls vorteilhaft ein Laserstrahlelement angewendet werden.

Durch die Merkmale der Erfindung wird eine Reinigungsvorrichtung, insbesondere ein Reinigungssystem geschaffen, welche alle Leistungsvorteile des von innen nach außen durchströmten statischen Siebbandes voll verwirklicht, einen geringen Druckverlust aufweist und eine effektive Schmutzabreinigung unter Wasser herbeiführt, weil das Schmutzgut ebenfalls unter Wasser einer Fördereinrichtung zugeführt wird. Es sind keine beweglichen Sieb-Feinrechenelemente unter Wasser vorhanden, so daß nur ein geringer Verschleiß eintritt. Im Störfall wird die Reinigungsvorrichtung automatisch überflutet. Die großen Siebflächen ergeben geringe Druckverluste und geringe Bauhöhen. Die Schmutzabreinigung des Rechenteils kann im Bedarfsfall dabei auch von Hand ausgeführt werden. Bevorzugt wird jedoch die Verwendung eines gesteuert bewegbaren Schmutzablöseelementes oder eines Absaugsystems mit sensorgesteuerter Robotertechnik.

In der Zeichnung sind Ausführungsbeispiele der Erfindung schematisch dargestellt; es zeigen:
- Fig. 1: Einen Längsschnitt durch ein Gerinne mit einer Reinigungsvorrichtung mit zwei konvergierenden Rechenteilen und mit schaberartigen Schmutzablöseelementen,
- Fig. 2: eine Draufsicht auf die Reinigungsvorrichtung nach Fig. 1,
- Fig. 3: einen Längsschnitt durch ein Gerinne mit als Führungswalzen ausgebildeten Schmutzablöseelementen,
- Fig. 4: eine Draufsicht auf die Ausführung nach Fig. 3,
- Fig. 5: einen Längsschnitt durch ein Gerinne mit einem beidseitig einsetzbaren Schmutzablöseelement,
- Fig. 6: eine Draufsicht auf die Ausführung nach Fig. 5,
- Fig. 7: einen Längsschnitt durch ein Gerinne mit einer Reinigungsvorrichtung, bei der die Fahrantriebseinheiten der Schmutzablöseelemente längs und quer zur Strömungsrichtung verfahrbar sind,
- Fig. 8: eine Draufsicht auf eine Ausführung nach Fig. 7,
- Fig. 9: einen Längsschnitt durch ein Gerinne mit einer Reinigungsvorrichtung, die schrittweise wandernde Schmutzablöseelemente enthält,
- Fig. 10: eine Draufsicht auf die Reinigungsvorrichtung nach Fig. 9,
- Fig. 11: einen Längsschnitt durch ein Gerinne mit einem einzigen schrägliegenden Rechenteil,
- Fig. 12: eine Draufsicht auf eine Reinigungsvorrichtung nach Fig. 11,
- Fig. 13: einen Längsschnitt durch ein Gerinne mit einer Reinigungsvorrichtung, welche zwei divergierende Rechenteile aufweist,
- Fig. 14: eine Draufsicht auf eine Reinigungsvorrichtung nach Fig. 13,
- Fig. 15: eine Draufsicht auf eine Reinigungsvorrichtung mit abschnittsweise strömungsparallelen Abscheideflächen.

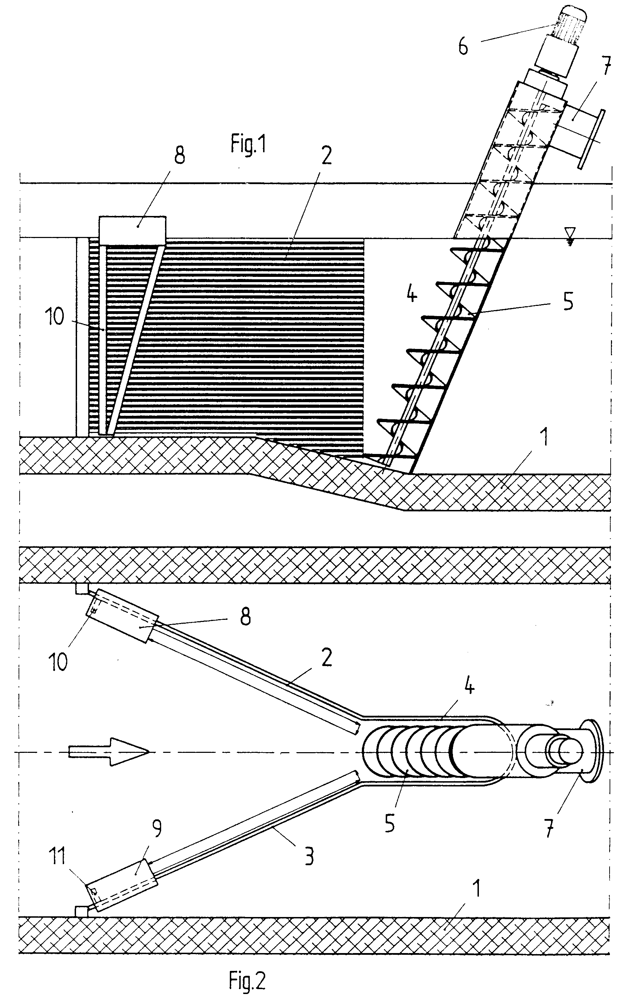

Bei dem Ausführungsbeispiel der Figuren 1 und 2 sind in einem Gerinne 1 zwei ebenflächige Rechenteile mit zwei in Strömungsrichtung (siehe Pfeil) konvergierenden Abscheideflächen 2,3 vorgesehen, die in ihrem Scheitelbereich in eine Fördermulde 4 übergehen. In diese Fördermulde 4 greift als Fördereinrichtung eine schrägliegende Förderschnecke 5 ein, die durch einen elektrischen Antriebsmotor 6 angetrieben wird. Im oberen Endbereich der Förderschnecke befindet sich ein Aufsatzstutzen 7 für das abzuführende Schmutzgut. Auf den beiden Innenseiten der Abscheideflächen 2,3 sind mit Hilfe von Fahrantriebseinheiten 8,9 zwei als Dreieckschaber ausgebildete Schmutzablöseelemente 10,11 verfahrbar, deren Führung durch in der Zeichnung nicht erkennbare Führungselemente längs der Abscheideflächen 2,3 erfolgt. Eine Bewegungssteuerung für die beiden Schmutzablöseelemente 10,11 ist derart vorgesehen, daß diese nur bei der Vorwärtsbewegung in Richtung auf die Fördermulde 4 auf den Abscheideflächen 2,3 schabend aufliegen, während sie bei der Rückwärtsbewegung in ihre Ausgangsposition von den Abscheideflächen 2,3 abgehoben werden.

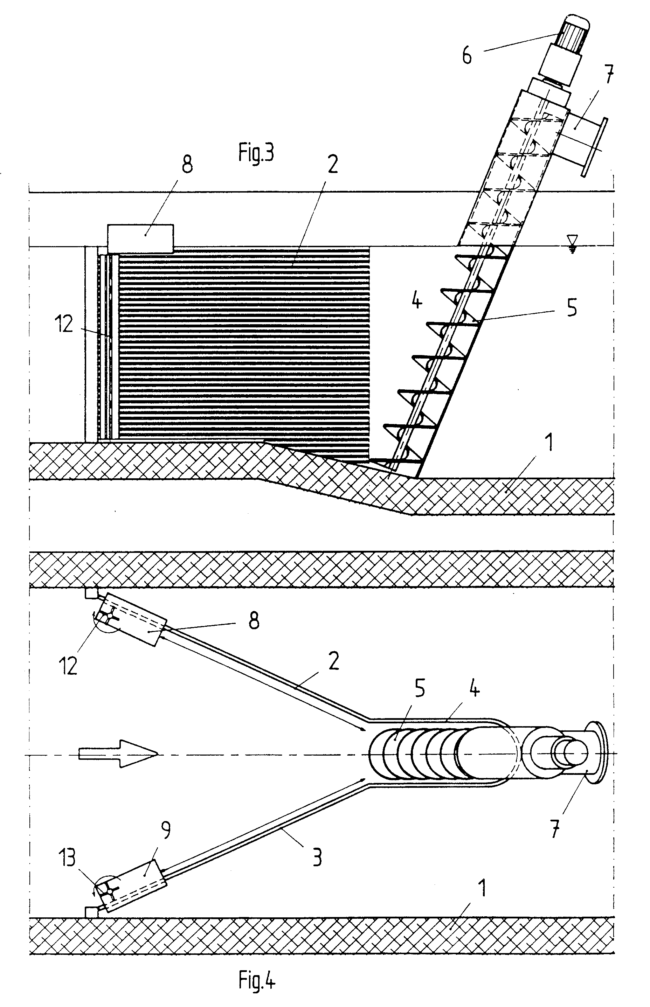

Die alternative Ausführung der Reinigungsvorrichtung nach Fig. 3 und 4 zeigt in der Anordnung der Abscheideflächen 2,3 und der Förderschnecke 5 sowie der Fahrantriebseinheiten 8,9 einen mit Fig. 1 und 2 übereinstimmenden Aufbau. Anstelle der abhebenden Dreieckschaber sind in dieser Ausführungsform motorisch angetriebene Bürstenwalzen 12,13 als Schmutzablöseelemente vorgesehen.

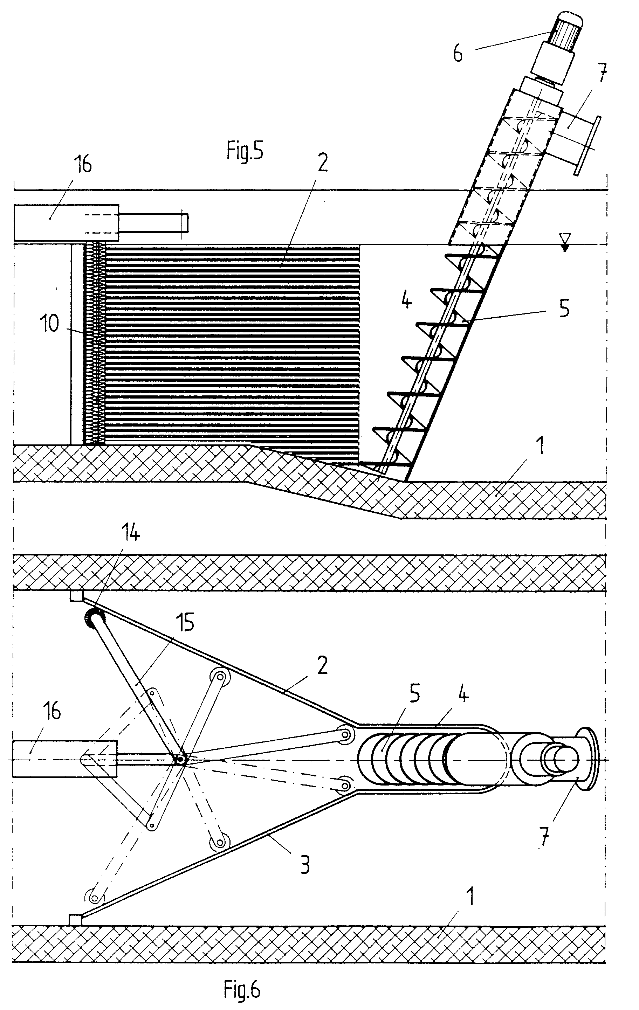

Die Ausbildung nach Fig. 5 und 6 stimmt in ihrem grundsätzlichen Aufbau mit den vorangehenden Ausführungsformen überein. Auf den Abscheideflächen 2,3 bewegt sich nur ein einziges rollen- bzw. bürstenförmiges Schmutzablöseelement 14, welches über ein Führungsgestell 15 mit einem Manipulator 16 (Quasiroboter) in Verbindung steht. Der Manipulator 16 kann so gesteuert werden, daß jeweils nur Teilbereiche der Abscheideflächen 2,3 nach Abruf über Sensoren entsprechend dem Verschmutzungsgrad gereinigt werden.

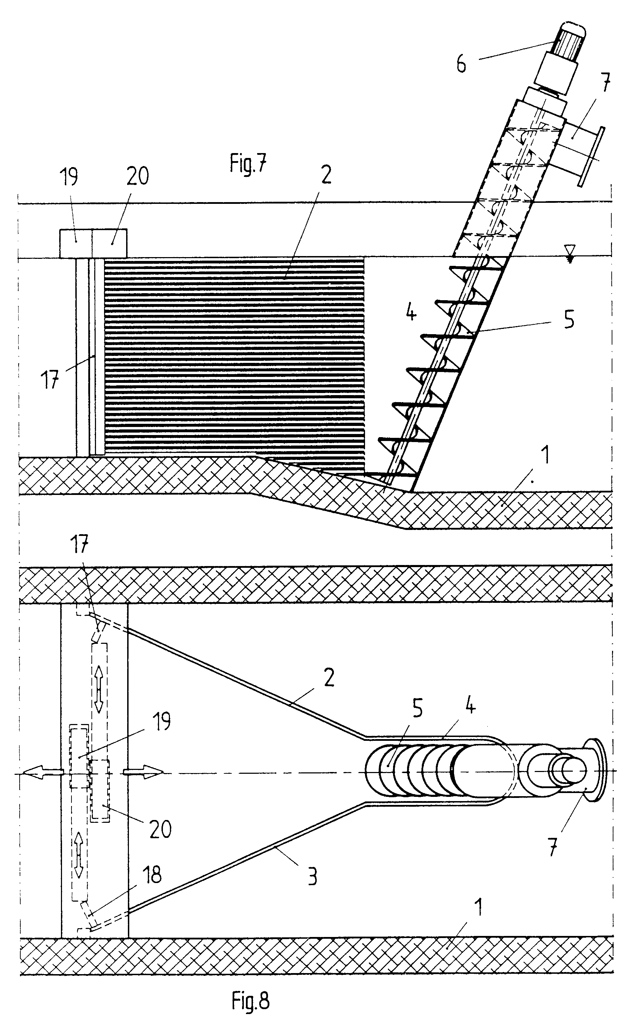

Die grundsätzliche Anordnung ist auch in der Ausführungsform der Figuren 7 und 8 unverändert beibehalten worden. Bei dieser alternativen Lösung sind leistenförmige Schmutzablöseelemente 17,18 mit zwei senkrecht zur Strömungsrichtung verschiebbaren Fahrwerkteilen 19,20 verbunden und zu einer gemeinsamen Fahrantriebseinheit zusammengefaßt. Diese Fahrwerkteile 19,20 bilden zusammen die Fahrantriebseinheit, die in und entgegen der Strömungsrichtung verfahrbar ist. Dadurch lassen sich die Abscheideflächen 2,3 durch die leistenförmigen Schmutzablöseelemente 17,18 in der eingangs erläuterten Weise von Schmutzgutablagerungen befreien.

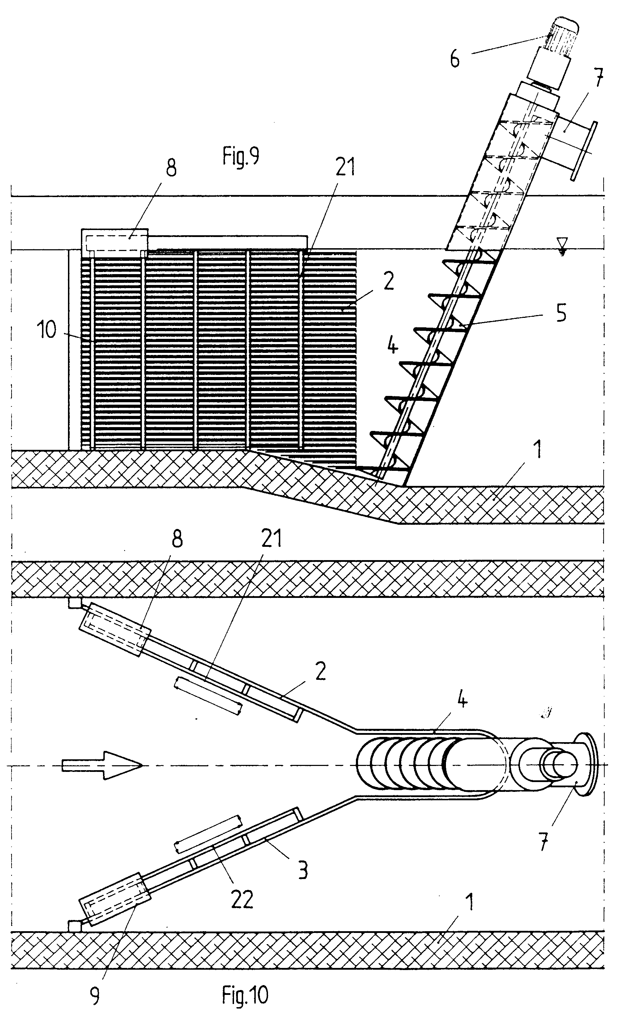

Bei der Ausführung nach Figuren 9 und 10 bestehen die Schmutzablöseelemente aus je vier mechanisch starr miteinander verbundenen Schabern als Multieinheiten 21,22, welche in Verbindung mit den Fahrantriebseinheiten 8,9 nach den für die Ausführungsform nach Figuren 1 und 2 angegebenen Bewegungsschemata jeweils schrittweise arbeiten. Das Schmutzgut wandert ebenfalls schrittweise in Fördermulde 4 der Förderschnecke 5.

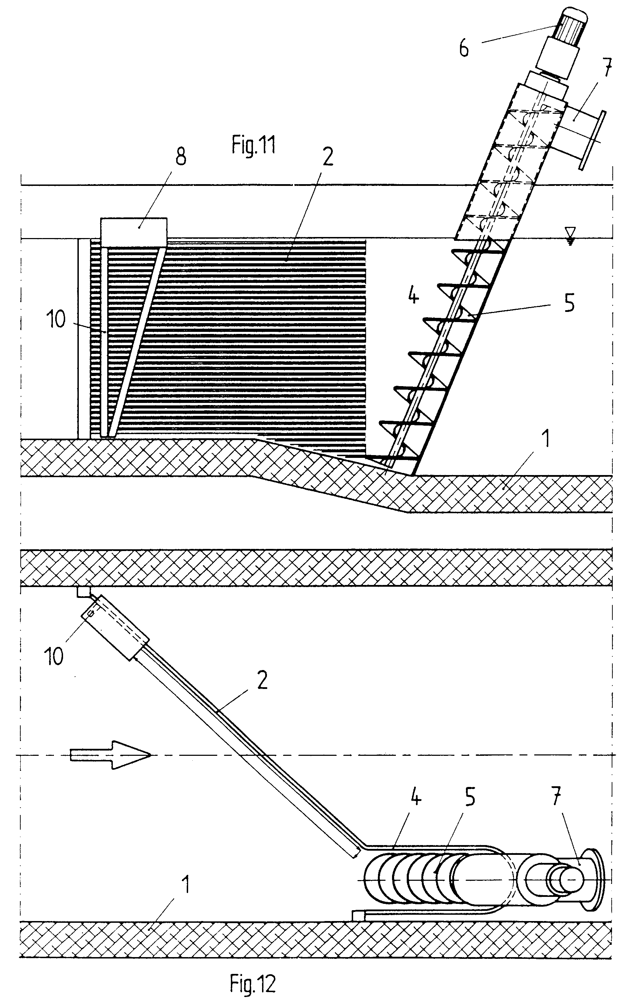

Die Ausführungsform der Figuren 11 und 12 unterscheidet sich von allen vorangegangenen Ausführungsformen dadurch, daß nur ein einziger schrägliegender Rechenteil mit einer Abscheidefläche 2 in Verbindung mit einem Dreieckschaber 10 an einer Fahrantriebseinheit 8 vorgesehen ist. Die Fördermulde 4 und die Förderschnecke 5 liegen dabei in unsymmetrischer Anordnung im Bereich der einen Gerinnewand. Der Dreieckschaber arbeitet wie in der Ausführungsform nach Fig. 1 und 2 abhebend.

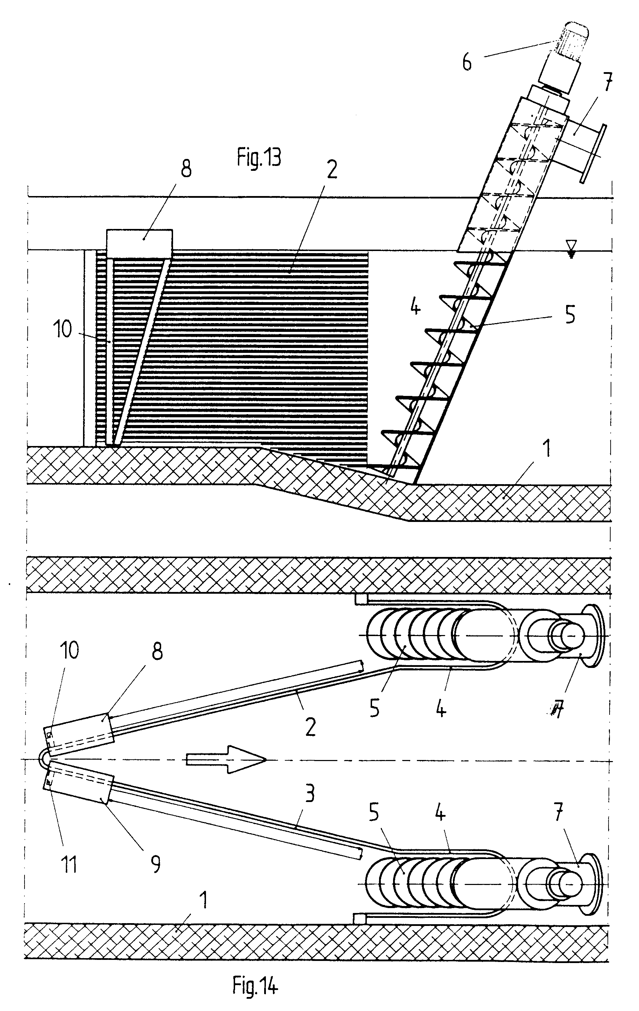

Die Ausführungsform der Figuren 13 und 14 ist von Ausführungsformen der Figuren 1 und 2 im wesentlichen dadurch verschieden, daß die beiden Rechenteile mit ihren Abscheideflächen 2,3 in Strömungsrichtung divergieren und daß an ihren strömungsabwärtsseitigen Enden je eine Förderschnecke 5 in einer Fördermulde 4 angeordnet ist. Die Ausbildung der übrigen Teile entspricht sinngemäß der Ausführungsform nach Figuren 1 und 2.

Bei allen Ausführungsbeispielen kann die Fördermulde 4 zur Aufnahme einer Förderschnecke 5 als durchströmbare Siebfläche ausgebildet sein.

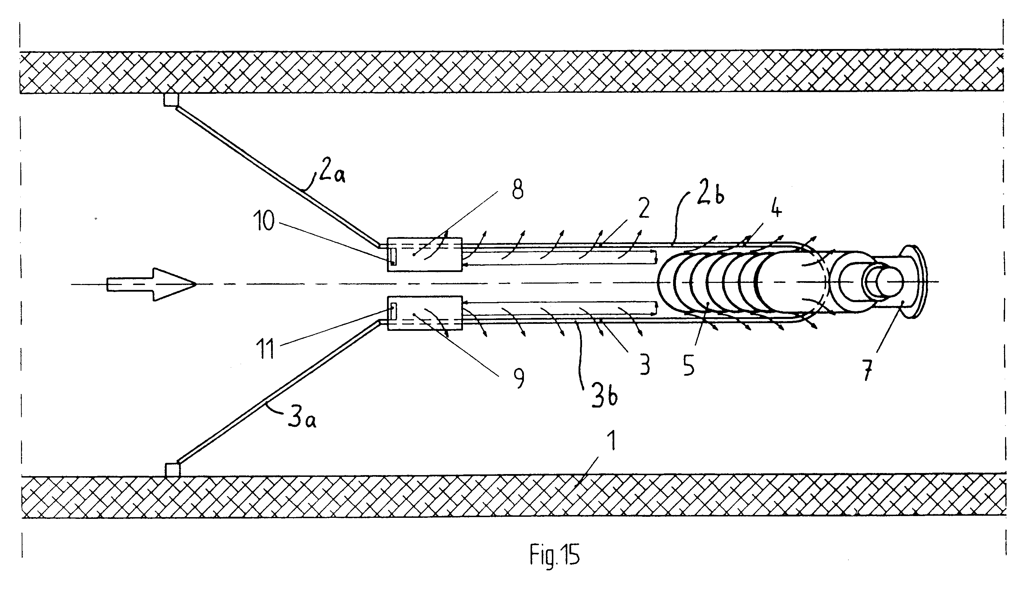

Die Ausführungsform nach Fig. 15 läßt zwei Abscheideflächen 2,3 erkennen, welche in einem Eingangsbereich mit konvergierenden Abschnitten 2a,3a gestaltet sind. Die konvergierenden Abschnitte 2a,3a gehen jeweils in parallel liegende Abschnitte 2b,3b über. Die beiden Fahrantriebseinheiten 8,9 enthalten zwei als Schaber ausgebildete Schmutzablöseelemente 10,11, die durch eine Bewegungssteuerung derart geführt werden, daß sie nur bei der Vorwärtsbewegung in Richtung auf die Fördermulde 4 der Förderschnecke 5 an den Abscheideflächen 2,3 schabend aufliegen, während die Rückführung ohne Oberflächenkontakt frei erfolgt. In dem vorliegenden Ausführungsbeispiel ist der Fahrweg der Fahrantriebseinheit 8,9 auf die parallel liegenden Abschnitte 2b,3b der Abscheideflächen 2,3 beschränkt. Es kann jedoch gegebenenfalls zweckmäßig und technisch leicht realisierbar sein, den Fahrweg der Fahrantriebseinheiten 8,9 und der damit verbundenen Schmutzablöseelemente 10,11 auch auf die konvergierenden Abschnitte 2a,3a der Abscheideflächen 2,3 auszudehnen.

Die Anwendung parallel liegender Abschnitte der Abscheideflächen 2,3 erscheint als allgemein nützliches Grundprinzip auch bei Verwendung anderer Schmutzablöseelemente zweckvoll.

Der Fahrbewegung der Schmutzablöseelemente bzw. des einzigen Schmutzablöseelementes kann in bestimmten Fällen zusätzlich zur Fahrbewegung noch eine Auf- und Abbewegung überlagert werden, so daß die Ablösung des Schmutzgutes von der Oberfläche der Abscheideflächen sägeartig erfolgt.

## Patentansprüche

1. Reinigungsvorrichtung zur Reinigung von in einem Gerinne (1) fließendem Wasser, welches Schmutzgut mit Feststoffanteilen enthält, mit mindestens einem im wesentlichen unterhalb der Wasseroberfläche liegenden Rechenteil mit einer durchströmbaren, als Siebfläche wirksamen Abscheidefläche (2,3) in Verbindung mit einem relativ zur Rechenoberfläche bewegbaren Schmutzablöseelement (10,11;12,13;14;17,18;21,22), wobei das von der Abscheidefläche gelöste Schmutzgut durch eine mit dem Schmutzablöseelement (10,11;12,13;14;17,18;21,22) zusammenwirkende Fördereinrichtung aus dem Gerinne (1) transportiert wird, **dadurch gekennzeichnet,** daß mindestens ein im wesentlichen ebenflächiger feststehender Rechenteil mit wenigstens abschnittsweise zur strömungsrichtung schrägliegender Abscheidefläche (2,3) vorgesehen ist, wobei der Aufnahmeteil der Fördereinrichtung (5) in den Bereich des stromabwärtsseitigen Endes der Abscheidefläche (2,3) übergeht, und daß das Schmutzablöseelement (10,11;12,13;14;17,18;21,22) auf der Abscheidefläche (2,3) bewegbar ausgebildet ist.

2. Reinigungsvorrichtung nach Anspruch 1, **dadurch gekennzeichnet**, daß zwei Rechenteile mit wenigstens im Bereich ihrer an den Aufnahmeteil der Fördereinrichtung (5) anschließenden Abschnitte konvergierenden Abscheideflächen (2,3) vorgesehen sind und daß die Fördereinrichtung (5) im Bereich des Scheitelpunktes dieser konvergierenden Abschnitte angeordnet ist.

3. Reinigungsvorrichtung nach Anspruch 1, **dadurch gekennzeichnet,** daß zwei Rechenteile mit zwei an der Spitze miteinander verbundenen in Strömungsrichtung divergierenden Abscheideflächen (2,3) vorgesehen sind, und daß Fördereinrichtungen (5) an den strömungsabwärtsseitigen Enden der Abscheideflächen (2,3) angeordnet sind.

4. Reinigungsvorrichtung nach Anspruch 1, **dadurch gekennzeichnet,** daß ein in Strömungsrichtung schrägliegender Rechenteil eine sich nahezu über den ganzen Gerinnequerschnitt erstreckende Abscheidefläche (2) aufweist, an deren strömungsabwärtsseitgem Ende die Fördereinrichtung (5) angeordnet ist.

5. Reinigungsvorrichtung nach Anspruch 1, **dadurch gekennzeichnet,** daß die Fördereinrichtung (5) als Aufnahmeteil eine mit an den strömungsabwärtsseitigen Enden der Abscheideflächen (2,3) verbundene Fördermulde (4) aufweist, in welche die Fördereinrichtung (5) eingreift.

6. Reinigungsvorrichtung nach Anspruch 5, **dadurch gekennzeichnet,** daß die Fördereinrichtung ein Aufwärtsförderer (5) ist.

7. Reinigungsvorrichtung nach Anspruch 6, **dadurch gekennzeichnet,** daß der Aufwärtsförderer eine Förderschnecke (5) ist.

8. Reinigungsvorrichtung nach Anspruch 6, **dadurch gekennzeichnet,** daß der Aufwärtsförderer ein Vibrationsförderer ist.

9. Reinigungsvorrichtung nach Anspruch 1, **dadurch gekennzeichnet,** daß der Rechen als Führungsteil für das Schmutzablöseelement (10,11) ausgebildet ist.

10. Reinigungsvorrichtung nach Anspruch 1, **dadurch gekennzeichnet,** daß das Schmutzablöseelement (12,13) in Ausnehmungen der Abscheidefläche (2,3) eingreift.

11. Reinigungsvorrichtung nach Anspruch 1, **dadurch gekennzeichnet,** daß das Schmutzablöseelement ein Schaber (10,11) oder Abstreifer ist.

12. Reinigungsvorrichtung nach Anspruch 10, **dadurch gekennzeichnet,** daß das Schmutzablöseelement (12,13) mit einem Kamm oder einer Bürste in Ausnehmungen der Abscheidefläche (2,3) eingreift

13. Reinigungsvorrichtung nach Anspruch 1, **dadurch gekennzeichnet,** daß das Schmutzablöseelement (10,11;12,13) mit einer Fahrantriebseinheit (8,9;19,20;16) verbunden ist.

14. Reinigungsvorrichtung nach Anspruch 1, **dadurch gekennzeichnet,** daß das Schmutzablöseelement eine Saugvorrichtung ist.

15. Reinigungsvorrichtung nach Anspruch 1, **dadurch gekennzeichnet,** daß das Schmutzablöseelement nach der durch mindestens einen Sensor festgestellten Schmutzgutbeladung der Abscheideflächen (2,3) steuerbar ist.

16. Reinigungsvorrichtung nach Anspruch 1, **dadurch gekennzeichnet,** daß das Schmutzablöseelement (21,22) Teilbereiche der Abscheidefläche (2,3) in der Weise reinigt, daß das Schmutzgut durch das Schmutzablöseelement schrittweise zur Fördereinrichtung (5) transportiert wird.

17. Reinigungsvorrichtung nach Anspruch 1, **dadurch gekennzeichnet,** daß die Abscheideflächen (2,3) ebenflächig sind.

18. Reinigungsvorrichtung nach Anspruch 5, **dadurch gekennzeichnet,** daß die Fördermulde (4) als durchströmbare Siebfläche ausgebildet ist.

19. Reinigungsvorrichtung nach Anspruch 1, **dadurch gekennzeichnet,** daß als unterstützendes Ablöseelement oder als Fördereinrichtung ein Vibrationserzeuger vorgesehen ist.

20. Reinigungsvorrichtung nach Anspruch 1, **dadurch gekennzeichnet,** daß ein einziges Schmutzablöseelement (14) mit einem Manipulator (16) zur Reinigung beider Abscheideflächen (2,3) verbunden ist.

21. Reinigungsvorrichtung nach Anspruch 1, **dadurch gekennzeichnet,** daß zwei Rechenteile mit zur Strömungsrichtung schrägliegenden, einen Einlaufbereich bildenden Abscheideflächen (2,3) vorgesehen sind, und daß die beiden schrägliegenden Abscheideflächen in zur Strömungsrichtung parallel liegende Abschnitte der Abscheideflächen (2,3) übergehen, an die sich an den stromabwärtsseitigen Enden der Aufnahmeteil der Fördereinrichtung (5) anschließt.

22. Reinigungsvorrichtung nach Anspruch 1, **dadurch gekennzeichnet,** daß das Schmutzablöseelement ein Laserstrahlelement ist.

23. Reinigungsvorrichtung nach Anspruch 1, **dadurch gekennzeichnet,** daß der Fahrbewegung des Schmutzablöseelementes eine Auf/Ab-Bewegung überlagert ist.
